# EUROPÄISCHE PATENTSCHRIFT

(11) **EP 2 730 444 B1**
(45) Veröffentlichungstag und Bekanntmachung des Hinweises auf die Patenterteilung: **06.09.2017**
(21) Anmeldenummer: 13003354.1
(22) Anmeldetag: 02.07.2013
(51) Int. Cl.: B62D 61/12

(54) **Einhänger zum zumindest unterstützenden Antreiben eines Nutzfahrzeugs und/oder eines Nutzfahrzeug-Anhänger**
Insert for at least supported driving of a commercial vehicle and/or a commercial vehicle trailer
Système d'accroche pour l'entraînement au moins d'assistance d'un véhicule utilitaire et/ou d'une remorque de véhicule utilitaire

(30) Priorität: 09.11.2012 DE 102012022006
(43) Veröffentlichungstag der Anmeldung: 14.05.2014
(73) Patentinhaber: MAN Truck & Bus AG, 80995 München (DE)
(72) Erfinder: Theobald, Markus, 85764 Oberschleißheim (DE)
(74) Vertreter: v. Bezold & Partner Patentanwälte - PartG mbB

(56) Entgegenhaltungen:
- WO-A1-2008/131427
- WO-A2-2010/145661
- AT-U2- 11 551
- FR-A- 798 464
- FR-A- 864 977
- FR-A1- 2 856 959

## Beschreibung

Die Erfindung betrifft einen Einhänger zum zumindest unterstützenden, vorzugsweise zum zumindest zeitweise alleinigen, Antreiben eines Fahrzeugs, nämlich eines Nutzfahrzeugs und/oder eines Nutzfahrzeug-Anhängers.

Die gattungsgemäße WO 2010/145661 A2 offenbart eine Vorrichtung zur Ankopplung an ein Kraftfahrzeug mit mindestens einer Batterie und mindestens einem elektrischen Anschluss zur Verbindung mit einer Ladeeinheit sowie einer Kopplungsvorrichtung, die zum Koppeln der Vorrichtung mit dem Kraftfahrzeug vorgesehen ist. Ferner wird eine Tragstruktur mit mindestens einer Achse und mindestens einem Rad offenbart, wobei die Vorrichtung mit dem Kraftfahrzeug verbunden ist.
Nutzfahrzeuge wie etwa Lastkraftwagen und Omnibusse, die ausschließlich mit Verbrennungsmotoren angetrieben werden, sind im Stand der Technik bekannt und weisen insbesondere den Nachteil eines hohen Kraftstoffverbrauchs auf. Im Stand der Technik sind zudem bereits Nutzfahrzeuge bekannt, in die alternative Antriebe (z.B. Elektroantriebe) zur Bildung von Hybridantrieben integriert sind, mittels denen der Nachteil des hohen Kraftstoffverbrauchs reduziert werden kann. Allerdings erfordern Hybridantriebe, insbesondere Elektrohybridantriebe einen großen Integrations- und Modifikationswand an den Nutzfahrzeugen, um den Hybridantrieb darstellen zu können. Des Weiteren führen die Hybridantriebe zu einem zum Teil beträchtlichen Zusatzgewicht für die Nutzfahrzeuge, selbst dann, wenn die alternativen Antriebe z.B. während einer quasi statischen Fahrt per se gar nicht gebraucht werden. Die Hybridantriebe beanspruchen zudem viel Raum, der in den Nutzfahrzeugen ohnehin schon stark begrenzt ist.
Eine Aufgabe der Erfindung ist es, eine alternative und/oder verbesserte Antriebsmöglichkeit für ein Fahrzeug vorzugsweise in Form eines Nutzfahrzeugs und/oder Nutzfahrzeug-Anhängers zu schaffen.

Diese Aufgabe wird mit den Merkmalen des Hauptanspruchs gelöst. Vorteilhafte Weiterbildungen können den Unteransprüchen entnommen werden.

Die Erfindung stellt einen Einhänger zum zumindest unterstützenden, vorzugsweise zum zumindest zeitweise alleinigen, Antreiben eines Fahrzeugs zur Verfügung. Das Fahrzeug ist z.B. ein Nutzfahrzeug (z.B. ein Lastkraftwagen oder ein Omnibus) und/oder ein Nutzfahrzeug-Anhänger. Der Einhänger umfasst zumindest ein Rad, vorzugsweise zumindest zwei Räder, eine insbesondere motorisierte Antriebseinrichtung, einen Energiespeicher für die Antriebseinrichtung, eine Kopplungseinrichtung, über die der Einhänger mit dem Fahrzeug zweckmäßig demontierbar verbunden werden kann, und eine Tragstruktur.

Die Antriebseinrichtung kann zum Antreiben des Rads des Einhängers dienen und die Tragstruktur kann zur Aufnahme von Fahrzeuggewicht ausgeführt sein, z.B. um die Traktion des Einhängers zu erhöhen und/oder die Achslast zumindest einer Fahrzeugachse zu reduzieren.

Alternativ oder ergänzend kann die Antriebseinrichtung mit einer Schnittstelle versehen sein, die zum Antreiben einer Radachse, vorzugsweise einer Hinterachse, des Fahrzeugs ausgeführt ist, und die Tragstruktur kann ausgeführt sein, zumindest das Einhängergewicht zu tragen. Allerdings kann die Tragstruktur wie zuvor beschrieben ebenso zur Aufnahme von Fahrzeuggewicht ausgeführt sein, z.B. um die Traktion des Einhängers zu erhöhen und/oder die Achslast zumindest einer Fahrzeugachse zu reduzieren.

Die Antriebseinrichtung ist vorzugsweise, aber nicht zwangsläufig als sogenannte alternative Antriebseinrichtung (z.B. Elektroantriebseinrichtung, Gasantriebseinrichtung, Hydraulikantriebseinrichtung, Brennstoffzellenantriebseinrichtung, etc.) ausgeführt und mit einer dazu passenden Energiespeichereinrichtung ausgestattet. Der Einhänger kann genutzt werden, um sonst üblicherweise im Fahrzeug integrierte Funktionseinrichtungen (z.B. alternativer Antrieb, Energiespeicher, Hilfsantrieb(e), Nebenaggregat(e), etc.) aufzunehmen. Der Einhänger kann nach Bedarf an das Fahrzeug angebracht und nach Bedarf davon entfernt werden. Dadurch wird ermöglicht, dass das Einhänger-Zusatzgewicht nicht ständig von dem Fahrzeug mitgeführt werden muss. Der an- und abkoppelbare Einhänger kann somit zur Gewichts- und folglich Kraftstoffreduzierung des Fahrzeugs beitragen. Ein Einhänger kann z.B. am Startpunkt von dem Fahrzeug entfernt werden, wenn das Fahrzeug eine überwiegend quasi statische Fahrt (z.B. Autobahn-, Überlandfahrt, etc. mit wenigen Brems-/Beschleunigungsvorgängen) zurückzulegen hat. Ein Einhänger kann an z.B. einem Ziel- oder Zwischenpunkt an das Fahrzeug montiert werden, wenn das Fahrzeug eine überwiegend quasi dynamische Fahrt (z.B. innerstädtische Fahrt, etc. mit vielen Brems-/Beschleunigungsvorgängen) zurückzulegen hat. Mittels des Einhängers kann folglich z.B. der Nachteil beseitigt werden, dass Fahrzeuge Hybrid- oder anderes Zusatzgewicht quasi permanent mitzuführen haben, obwohl es tatsächlich gar nicht erforderlich wäre. Zu erwähnen ist, dass insbesondere Elektrohybride zu einem beträchtlichen Zusatzgewicht führen. Bei quasi statischem Betrieb (z.B. Autobahn- oder Überlandfahrt) rechtfertigen die Vorteile integrierter Hybridantriebe die Nachteile meist nicht. Mittels des Einhängers können zudem ausschließlich mit einem Verbrennungsmotor ausgestattete Fahrzeuge auf einfache Weise mit einer alternativen Antriebseinrichtung ausgestattet werden und so von den Vorteilen eines Hybridantriebs profitieren. Die Fahrzeuge haben lediglich eine Verbindungseinrichtung aufzuweisen, über die der Einhänger mit dem Fahrzeug verbunden werden kann. Dadurch muss der insbesondere bei Elektrohybriden große Integrations- und Modifikationswand, der zur Darstellung des integrierten Hybridantriebs an den Fahrzeugen erforderlich ist, nicht betrieben werden. Wenn in die Fahrzeuge Plug-in-Hybride integriert sind, müssen die Fahrzeuge still stehen, um die Plug-in-Hybride am Netz aufladen zu können. Ferner sind Nutzfahrzeuge meist zwangsläufig tiefen Außentemperaturen ausgesetzt - sie werden nur selten in Hallen oder Gargagen geparkt, noch seltener in beheizten Hallen oder Garagen -, was vor allem bei längeren Standzeiten nachteilhaft für Elektrohybride, insbesondere dessen Elektrobatterien ist. Erfindungsgemäße Einhänger hingegen können z.B. in Logistikzentren, insbesondere bei Nichtbedarf oder Entladung, abgegeben, dort vorzugsweise temperatur-/wettergeschützt gelagert und optional aufgeladen werden und/oder in Logistikzentren nach Bedarf gechartert werden. So kann auf einfache Weise gewährleistet werden, dass quasi stets betriebsbereite Einhänger zur Verfügung stehen. Der Einhänger kann zudem dazu dienen, eine oder mehrere Fahrzeugachsen zu entlasten und z.B. zweckmäßig als Liftachse zu fungieren. Mittels Verwendung des zumindest einen Rads zählt der Einhänger nicht zur Fahrzeugmasse, sondern ist als besondere Art Anhänger einzustufen. Somit kann verhindert werden, dass die Nutzlast des Fahrzeugs durch den Einhänger reduziert wird. Die Erfindung ist nicht auf Ausführungsformen beschränkt, die sämtliche zuvor genannten Vorteile aufweisen bzw. die sämtliche eingangs oder zuvor beschriebenen Nachteile des Stands der Technik beseitigen. Vielmehr beansprucht die Erfindung auch allgemein Schutz für die folgenden Ausführungsformen.

So ist möglich, dass der Einhänger ausgeführt ist, um mitsamt Rad und vorzugsweise mitsamt Antriebseinrichtung, Energiespeicher und/oder Kopplungseinrichtung unter das Fahrzeug platziert zu werden, um es von unten anzutreiben. Der Einhänger ist insbesondere so ausgeführt, dass er mitsamt Rad und vorzugsweise mitsamt Antriebseinrichtung, Energiespeicher und/oder Kopplungseinrichtung hinter der Frontseite und vor der Heckseite des Fahrzeugs platziert werden kann. Dadurch kann z.B. gewährleistet werden, dass durch den Einhänger das Fahrzeug nicht oder nur geringfügig verlängert wird und/oder der Einhänger nahe zu einer oder mehreren Fahrzeugkomponenten positionierbar ist, die mit dem Einhänger in Wirkverbindung zu bringen sind. Allerdings umfasst die Erfindung auch Ausführungsformen, in denen ein Teil des Einhängers sich hinter oder sogar seitlich neben dem Fahrzeug erstreckt.

Es ist ebenso möglich, dass der Einhänger ausgeführt ist, um vorzugsweise mitsamt Rad hinter das Fahrzeug platziert zu werden, um es von hinten anzutreiben. Alternativ kann der Einhänger ausgeführt sein, vorzugsweise mitsamt Rad vor das Fahrzeug platziert zu werden, um es von vorne anzutreiben.

Die Kopplungseinrichtung ist zur lenkfesten Befestigung des Einhängers an dem Fahrzeug ausgeführt, wodurch der Einhänger, insbesondere dessen Tragstruktur, zweckmäßig zur Längsrichtung des Fahrzeugs ausgerichtet bleibt, selbst wenn das Fahrzeug ein Lenk-/Kurvenmanöver ausführt. Übliche Anhänger mit z.B. einer Kugelkopfanhängerkupplung oder einer Sattelkupplung folgen dem Zugfahrzeug gelenkig und somit nicht lenkfest.

Die Kopplungseinrichtung kann zudem ausgeführt sein, den Einhänger in Bezug auf seine Querrichtung zumindest geringfügig pendelbar an das Fahrzeug anzubringen. Der Einhänger ist insbesondere um eine Pendelachse pendelbar, die durch das unten erwähnte vordere Kopplungselement und das unten erwähnte hintere Kopplungsmittel definiert wird und/oder die sich im Wesentlichen mittig und in Längsrichtung des Einhängers erstreckt.

Die Kopplungseinrichtung kann ein hinteres vorzugsweise hakenförmiges Kopplungsmittel zum Einhaken an einem am Fahrzeug vorgesehenen Lagermittel umfassen. Die Kopplungseinrichtung kann zudem ein vorderes vorzugsweise ösenförmiges Kopplungselement zum Befestigen an einem am Fahrzeug vorgesehenen Lagerelement umfassen. Das hintere Kopplungsmittel und das vordere Kopplungselement sind zweckmäßig hintereinander angeordnet. Des Weiteren können das hintere Kopplungsmittel und das vordere Kopplungselement so aufeinander abgestimmt sein, dass das hintere Kopplungsmittel um das Rad nach oben schwenkbar ist zum Befestigen an dem Lagermittel, während vorzugsweise das vordere Kopplungselement bereits an dem Lagerelement montiert ist.

Der Einhänger kann mit einer rekuperativen Bremseinrichtung ausgestattet sein. Der Einhänger kann somit als Unterstützung für die Betriebsbremse und/oder die Dauerbremse dienen.

Die Antriebseinrichtung ist vorzugsweise als Elektroantriebsmaschine ausgeführt und/oder der Energiespeicher als Batterieeinrichtung. Zu erwähnen ist aber, dass der Einhänger auch mit anderen sogenannten alternativen Antriebseinrichtungen, wie etwa einer Gas-, Hydraulik- oder Brennstoffzellenantriebseinrichtung und einem dafür geeigneten Energiespeicher ausgestattet sein kann. Für alternativ angetriebene Nutzfahrzeuge kann der Einhänger sogar mit einer verbrennungsmotorischen Antriebseinrichtung ausgestattet sein.

Die Antriebseinrichtung ist so ausgeführt, dass das Rad wahlweise vorwärts oder rückwärts angetrieben werden kann. Dadurch kann z.B. das Fahrzeug vorwärts und rückwärts mittels des Einhängers angetrieben werden.

Der Einhänger umfasst eine Hebe- und/oder Senkeinrichtung. Die Hebe- und/oder Senkeinrichtung dient insbesondere dazu, das Rad nach Montage des Einhängers am Fahrzeug wahlweise anzuheben oder abzusenken und so z.B. in Bodenkontakt zu bringen oder vom Boden zu beabstanden. Dadurch kann der Einhänger in einen Verweilzustand (z.B. Rad von Boden beabstandet) und zumindest einen Betriebszustand (z.B. Rad in Bodenkontakt) gebracht werden und somit quasi als eine Art Liftachse fungieren.

Die Hebe- und/oder Senkeinrichtung ist zudem vorzugsweise so ausgeführt, dass über sie die Aufnahme des Fahrzeuggewichts durch den Einhänger der Größe nach einstellbar gestaltet werden kann.

Des Weiteren kann die Hebe- und/oder Senkeinrichtung genutzt werden, um die Tragstruktur der Höhe nach veränderbar zu gestalten, zweckmäßig vor der Montage des Einhängers an das Fahrzeug.

Die Antriebseinrichtung kann zusätzlich dazu dienen, die Hebe-/Senkeinrichtung anzutreiben.

Es ist möglich, dass der Einhänger selbst lenkbar ausgestaltet ist. Insbesondere kann die Antriebseinrichtung zwei Einzelradantriebe umfassen, wovon einer zum Antreiben eines ersten Rads und ein anderer zum Antreiben eines zweiten Rads des Einhängers ausgeführt ist. Die zwei Einzelradantriebe können zweckmäßig als Lenkmittel für den Einhänger und vorzugsweise somit auch des Fahrzeugs dienen.

Der Einhänger kann mit einer Führungseinrichtung (z.B. einem Führungsbolzen) ausgestattet sein, die entlang einer am Fahrzeug ausgebildeten Führungsbahn führbar ist, um den Einhänger an vordefinierter Position und/oder mit vordefinierter Ausrichtung unter dem Fahrzeug zu platzieren.

Der Einhänger kann händisch unter das Fahrzeug platziert und mit dem Fahrzeug verbunden werden. Es ist aber ebenso möglich, dass der Einhänger konfiguriert ist, zumindest abschnittsweise mittels der Antriebseinrichtung mit vordefinierter Geschwindigkeit entlang der Führungsbahn zu oder weg von der vordefinierten Position zu fahren. Es ist sogar möglich, dass die Kopplungseinrichtung ausgeführt ist, um an der vordefinierten Position automatisch an die Befestigungseinrichtung des Fahrzeugs anzukoppeln. Alternativ oder ergänzend kann der Einhänger eine Schnittstelle umfassen, die an der vordefinierten Position automatisch mit einer zugehörigen Fahrzeug-Schnittstelle verbindbar ist. Dadurch kann ein zumindest teilautomatisierter Montage- bzw. Demontagevorgang des Einhängers am Fahrzeug erzielt werden.

Der Einhänger kann zudem mit einer Empfängereinrichtung für eine Fernbedingung ausgestattet sein, über die der Einhänger ferngesteuert werden kann. Das ist z.B. dann vorteilhaft, wenn der Einhänger an einen Nutzfahrzeug-Anhänger montiert ist. Der Nutzfahrzeug-Anhänger kann dann mittels des Einhängers manövriert werden, ohne dass eine Ankupplung des Anhängers an das Nutzfahrzeug erforderlich ist.

Die Tragstruktur umfasst vorzugsweise einen ersten zweckmäßig oberen Tragabschnitt und einen zweiten zweckmäßig unteren Tragabschnitt, die an einer Schwenkachse und mittels der Hebe-/Senkeinrichtung schwenkbar miteinander verbunden sind. Der erste Tragabschnitt ist zur Montage an das Fahrzeug ausgeführt und kann vor der Montage der Höhe nach relativ zu dem zweiten Tragabschnitt veränderbar eingestellt werden. Der zweite Tragabschnitt kann nach der Montage mittels der Hebe-/Senkeinrichtung wahlweise angehoben oder abgesenkt werden, um so das Rad anzuheben oder abzusenken. Bevorzugt ist, dass sich die zuvor erwähnte Pendelachse und die Schwenkachse zumindest benachbart zu dem vorderen Kopplungselement schneiden.

Der Einhänger kann zumindest zwei Räder umfassen, zwischen denen ein Achsdifferenzial ausgebildet ist.

Der Einhänger kann zumindest eine fluidische, elektrische und/oder antriebskraftbezogene Schnittstelle zur Verbindung mit einer zugehörigen, am Fahrzeug ausgebildeten Schnittstelle aufweisen. Die fluidische, elektrische und/oder antriebskraftbezogene Schnittstelle des Einhängers dient dazu, das Fahrzeug mit einem Fluid, elektrischer Energie und/oder Antriebskraft zu versorgen. Zudem kann der Einhänger natürlich mit einer Schnittstelle versehen sein, über die ein Informationsaustausch, z.B. Steuerungsbefehle zwischen dem Einhänger und dem Fahrzeug übertragen werden können.

Zu erwähnen ist noch, dass die Antriebseinrichtung eine oder mehrere Antriebseinheiten aufweisen kann.

Die Erfindung ist nicht auf einen Einhänger beschränkt, sondern umfasst auch ein Fahrzeug in Form eines Nutzfahrzeugs und/oder eines Nutzfahrzeug-Anhängers, das insbesondere zur zweckmäßig lösbaren Anbringung eines wie hierin beschriebenen Einhängers ausgeführt ist. Das Fahrzeug ist insbesondere mit einer Befestigungseinrichtung ausgestattet, die vorzugsweise ein vorderes Lagerelement und ein hinteres Lagermittel aufweist. Die Befestigungseinrichtung ist hinter der Frontseite und vor der Heckseite des Fahrzeugs, insbesondere zumindest teilweise unter einer Ladefläche des Fahrzeugs angeordnet, von der Unterseite des Fahrzeugs zugänglich und zum zweckmäßig lösbaren Verbinden mit der Kopplungseinrichtung des Einhängers wie hierin beschrieben ausgeführt. Die Befestigungseinrichtung ist vorzugsweise mit dem Fahrgestell des Fahrzeugs verbunden, z.B. mit einem oder mehreren Längs- und/oder Querträgers des Fahrgestells.

Das Fahrzeug kann z.B. eine unten am Fahrzeug verlaufende Führungsbahn für eine am Einhänger ausgeführte Führungseinrichtung aufweisen, um den Einhänger an vordefinierter Position und/oder mit vordefinierter Ausrichtung unter dem Fahrzeug zu platzieren. Die Führungsbahn beginnt zweckmäßig an einer Stelle, die von einer Außen- oder der Heckseite des Fahrzeugs aus quasi frei zugänglich ist.

Das Fahrzeug kann mit zumindest einer fluidischen, elektrischen und/oder antriebskraftbezogenen Schnittstelle ausgestattet sein zur Verbindung mit einer zugehörigen, am Einhänger ausgebildeten Schnittstelle. Es ist möglich, dass die am Fahrzeug ausgeführte Schnittstelle insbesondere hinter der Frontseite und vor der Heckseite des Fahrzeugs angeordnet ist, zweckmäßig unter einer Ladefläche des Fahrzeugs ausgebildet ist, von der Unterseite des Fahrzeugs zugänglich ist und zur Verbindung mit einer zugehörigen, am Einhänger ausgebildeten Schnittstelle ausgeführt ist, wodurch das Fahrzeug mit einem Fluid, elektrischer Energie und/oder Antriebskraft aus dem Einhänger versorgt werden kann. Wie schon zuvor in Bezug auf den Einhänger beschrieben, kann das Fahrzeug zudem mit einer Schnittstelle ausgestattet sein, über die Steuersignale oder andere Informationen zwischen dem Einhänger und dem Fahrzeug übertragen werden können.

Die Befestigungseinrichtung ist vorzugsweise so realisiert, dass das vordere Lagerelement und das hintere Lagermittel hinter der Frontseite und vor der Heckseite des Fahrzeugs angeordnet sind.

Das Fahrzeug kann zudem eine Radachse, vorzugsweise eine Hinterachse, umfassen, die mit einer Schnittstelle versehen ist, über die die Radachse mittels der Antriebseinrichtung des Einhängers angetrieben werden kann. Z.B. kann die Radachse eine Zapfwellenkopplung aufweisen oder in Form einer Durchtriebsachse konstruiert sein. Die Radachse kann z.B. eine einzelradangetriebene Achse oder eine quasi übliche Fahrzeugachse sein, die allerdings mit einer geeigneten Antriebsschnittstelle für den Einhänger versehen sind.

Die Erfindung umfasst außerdem eine Anordnung mit einem Fahrzeug wie hierin beschrieben und einem Einhänger wie hierin beschrieben.

Die oben beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine perspektivische Ansicht eines Einhängers gemäß einer Ausführungsform der Erfindung,
- Fig. 2: zeigt eine Seitenansicht des Einhängers aus Fig. 1 montiert an ein Fahrzeug und mit in Bodenkontakt stehenden Rädern gemäß einer Ausführungsform der Erfindung,
- Fig. 3: zeigt eine vergrößerte Seitenansicht eines Teils der Fig. 2,
- Fig. 4: zeigt den Einhänger und das Fahrzeug der Figuren 2 und 3 mit vom Boden beabstandeten Rädern des Einhängers,
- Fig. 5: zeigt eine vergrößerte Seitenansicht eines Teils der Fig. 4,
- Fig. 6: zeigt eine perspektivische Ansicht, die den Anbringvorgang eines Einhängers an ein Fahrzeug gemäß einer Ausführungsform der Erfindung veranschaulicht, und
- Fig. 7: zeigt eine schematische Draufsicht auf ein Fahrzeug mit montiertem Einhänger während eines Lenk-/Kurvenmanövers gemäß einer Ausführungsform der Erfindung.

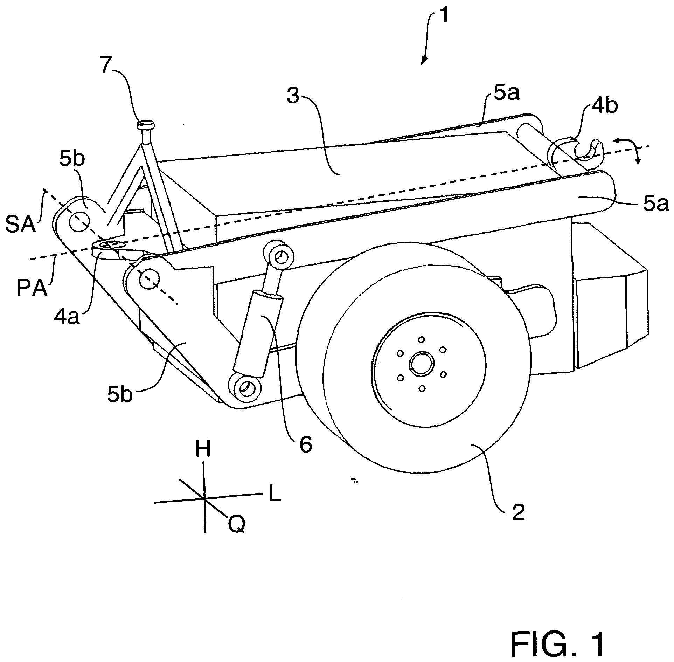

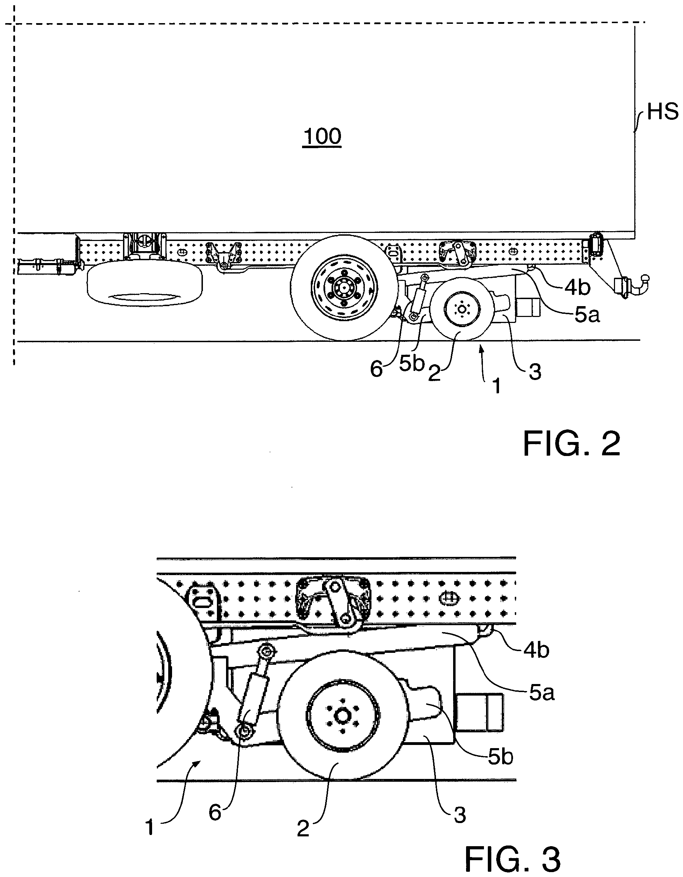

Figur 1 zeigt eine perspektivische Ansicht eines Einhängers 1 gemäß einer Ausführungsform der Erfindung. Der Einhänger 1 dient dazu, ein in den Figuren 2 bis 6 gezeigtes Fahrzeug 100 in Form eines Nutzfahrzeugs bzw. eines Nutzfahrzeug-Anhängers zumindest unterstützend, vorzugsweise zumindest zeitweise alleinig anzutreiben. Der Einhänger 1 umfasst zwei Räder 2 und einen Aufnahmeraum 3.

In dem Aufnahmeraum 3 ist ein Energiespeicher für die Antriebseinrichtung und eine Steuer- oder Regelungseinrichtung für den Einhänger 1 untergebracht, die in den Figuren nicht zu sehen sind. Der Einhänger 1 umfasst ferner eine ebenfalls nicht zu sehende Antriebseinrichtung zum Antreiben der Räder 2 und eine ebenfalls nicht zu sehende rekuperative Bremseinrichtung für den Einhänger 1, mittels der sich der Einhänger 1 quasi durch Rekuperation selbst bremsen kann. Der Einhänger 1 stellt somit ein autarkes Antriebsmodul für das Fahrzeug 100 dar.

Der Einhänger 1 ist zudem mit einer Kopplungseinrichtung 4a, 4b zum lösbaren Ankoppeln an das Fahrzeug 100 versehen und weist eine Tragstruktur 5a, 5b auf, die als räumliches Rahmentragwerk realisiert ist und zur Aufnahme von Fahrzeuggewicht dient, um einerseits die Traktion des Einhängers 1 zu erhöhen und zugleich die verbleibende(n) Fahrzeugsachse(n) zu entlasten.

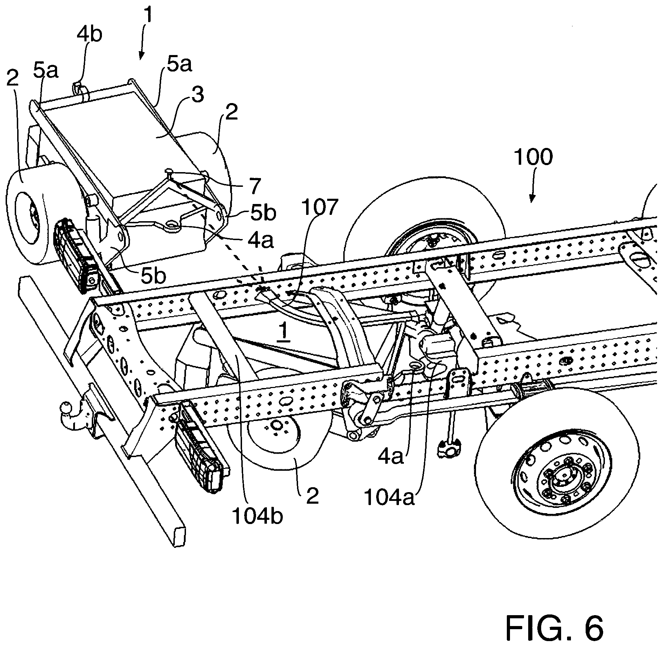

Die Kopplungseinrichtung 4a, 4b umfasst ein vorderes ösenförmiges Kopplungselement 4a zum Befestigen an einem am Fahrzeug 100 vorgesehenen vorderen Lagerelement 104a (vgl. Figur 6) und ein hinteres hakenförmiges Kopplungsmittel 4b zum Einhaken an einem am Fahrzeug 100 vorgesehenen hinteren Lagermittel 104b (vgl. Figur 6). Das ösenförmige Kopplungselement 4a und das hakenförmige Kopplungsmittel 4b sind in Längsrichtung L des Einhängers 1 hintereinander angeordnet. Dadurch wird ermöglicht, dass das hakenförmige Kopplungsmittel 4b um die Räder 2 nach oben schwenkbar ist, um mit dem Lagermittel 104b in Eingriff gebracht werden zu können, während das ösenförmige Kopplungselement 4a bereits an dem Lagerelement 104a montiert ist. Dadurch wird zudem ermöglicht, dass der Einhänger 1 um eine Pendelachse PA, die durch das ösenförmige Kopplungselement 4a und das hakenförmige Kopplungsmittel 4b definiert wird und sich vorzugsweise im Wesentlichen mittig und in Längsrichtung L des Einhängers 1 erstreckt, an das Fahrzeug 100 in Bezug auf die Querrichtung Q des Einhängers 1 pendelbar anbringbar ist, was durch den Doppelpfeil in Figur 1 angedeutet ist.

Der Einhänger 1 ist zudem mit einer Hebe-/Senkeinrichtung 6 ausgestattet, die z.B. zumindest einen Hydraulikzylinder, zumindest einen Luftfederbalg, etc. umfassen kann.

Die Hebe-/Senkeinrichtung 6 dient einerseits dazu, die Tragstruktur 5a, 5b und somit die Kopplungseinrichtung 4a, 4b im an das Fahrzeug 100 noch nicht montiertem Zustand der Höhe H nach veränderbar zu gestalten, wodurch der Einhänger 1 an Fahrzeuge 100 mit unterschiedlicher Bodenfreiheit angepasst werden kann. Die Bodenfreiheit von Fahrzeugen 100 variiert stark, z.B. in Abhängigkeit des Fahrzeug-Typs (z.B. Sattelzugmaschine, Verteiler-Lastkraftwagen, etc.), der Reifenluftdrücke des Fahrzeugs, des Beladungszustands des Fahrzeugs, etc..

Die Hebe-/Senkeinrichtung 6 dient anderseits dazu, die Räder 2 nach Montage des Einhängers 1 am Fahrzeug 100 wahlweise anzuheben oder abzusenken und somit wahlweise in Bodenkontakt zu bringen oder vom Boden zu beabstanden. Der Einhänger 1 kann somit auch als Liftachse für das Fahrzeug 100 fungieren. Die Räder 2 können zudem z.B. automatisch eingezogen werden, wenn im Fahrzeug 100 ein Rückwärtsgang eingelegt wird.

Die Hebe-/Senkeinrichtung 6 kann zudem so ausgeführt sein, dass das von der Tragstruktur 5a, 5b aufzunehmende Fahrzeuggewicht der Größe nach variabel einstellbar ist. Das kann z.B. durch Steuerung des Hydraulik- oder Luftdrucks in den zuvor erwähnten Hydraulikzylindern oder Luftfederbälgen realisiert werden.

Die Tragstruktur 5a, 5b umfasst einen ersten oberen Tragabschnitt 5a und einen zweiten unteren Tragabschnitt 5b, die an einer Schwenkachse SA und mittels der Hebe-/Senkeinrichtung 6 miteinander verbunden sind. Der erste Tragabschnitt 5a dient mittels der Kopplungseinrichtung 4a, 4b zur Montage an das Fahrzeug 100, während der zweite Tragabschnitt 5b die Räder 2 hält. Mittels der Hebe-/Senkeinrichtung 6 kann der zweite Tragabschnitt 5b und somit die Räder 2 angehoben oder abgesenkt werden, wenn der Einhänger 1 am Fahrzeug 100 montiert ist. Mittels der Hebe-/Senkeinrichtung 6 kann zudem der erste Tragabschnitt 5a der Höhe H nach relativ zu dem zweiten Tragabschnitt 5b veränderlich eingestellt werden, bevor der Einhänger 1 an das Fahrzeug 100 montiert wird.

Figur 1 ist ferner zu entnehmen, dass sich die Schwenkachse SA und die Pendelachse PA zumindest benachbart zu dem ösenförmigen Kopplungselement 4a schneiden.

Der Einhänger 1 ist zudem mit einer Führungseinrichtung 7 in Form eines nach oben abstehenden Führungsbolzens oder Führungsstifts ausgestattet. Die Führungseinrichtung 7 kann entlang einer am Fahrzeug 100 ausgebildeten Führungsbahn 107 (vgl. Figur 6) geführt werden, um den Einhänger 1 an vordefinierter Position und zugleich mit vorzugsweise vordefinierter Ausrichtung unter dem Fahrzeug 100 zu platzieren.

Die Antriebseinrichtung ist als Elektroantriebseinrichtung ausgeführt, während der Energiespeicher eine dazu passende Batterieeinrichtung ist. Die Antriebseinrichtung umfasst zwei Einzelradantriebe für die zwei Räder 2. Die Einzelradantriebe können die Räder 2 wahlweise vorwärts oder rückwärts antreiben und z.B. dazu genutzt werden, den Einhänger 1 und somit das Fahrzeug 100 zu lenken. Das ist insbesondere von Vorteil, wenn der Einhänger 1 zum Manövrieren eines Nutzfahrzeug-Anhängers verwendet werden soll. Dann kann der Einhänger 1 mit einer Empfängereinrichtung für eine Fernbedienung ausgestattet sein und eine Bedienperson kann mit Hilfe der Fernbedienung mittels des Einhängers 1 den Nutzfahrzeug-Anhänger manövrieren.

Der Einhänger 1 ist so gestaltet, dass er händisch unter das Fahrzeug 100 platziert werden kann. Der Einhänger 1 kann alternativ mit einer Steuerungseinrichtung ausgestattet sein, die den Einhänger 1 zumindest abschnittsweise mittels der Antriebseinrichtung mit vordefinierter Geschwindigkeit entlang der Führungsbahn 107 zu oder weg von der vordefinierten Position fahren lässt. Das ist insbesondere dann von Vorteil, wenn der Einhänger 1 zudem an der vordefinierten Position mit dem Fahrzeug 100 betriebsfertig verbunden wird. Es wäre dann nicht erforderlich, dass sich eine Person unter das Fahrzeug 100 begibt, um den Einhänger 1 mit dem Fahrzeug 100 zu verbinden. Der Einhänger 1 ermöglich somit einen zumindest teilautomatisierten Verbindungsvorgang an das Fahrzeug 100.

Der Einhänger 1 kann eine oder mehrere Schnittstellen umfassen, die zur Verbindung mit einer oder mehreren komplementären am Fahrzeug 100 ausgeführten Schnittstellen dienen. Die Schnittstellen können unterschiedlicher Art sein und z.B. zur Übertragung eines Fluids (z.B. eines Kraftstoffs, Gases, etc.), elektrischer Energie oder Antriebskraft (z.B. ein Nebenabtrieb, eine Zapfwellenverbindung, etc.) von dem Einhänger 1 auf das Fahrzeug 100 dienen. Der Einhänger 1 kann somit zusätzlich zu seiner Funktion, das Fahrzeug 100 anzutreiben, weitere Funktionen übernehmen, z.B. als Energiequelle-/speicher oder Hilfsantrieb für Fahrzeug-Zusatzverbraucher, Fahrzeug-Nebenaggregate oder Baustellen genutzt werden. Natürlich kann der Einhänger 1 zudem eine Schnittstelle umfassen, mittels der Informationen, Daten, Befehle, etc. zwischen dem Einhänger 1 und dem Fahrzeug 100 ausgetauscht werden können.

Figur 1 ist ferner zu entnehmen, dass die Kopplungseinrichtung 4a, 4b und die Führungseinrichtung 7 an dem ersten Tragabschnitt 5a festgemacht sind, während die Räder 2 von dem zweiten Tragabschnitt 5b gehalten werden.

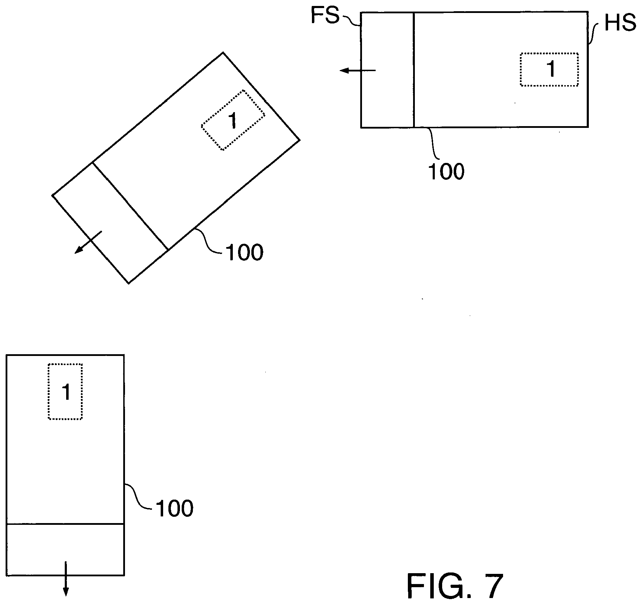

Figur 2 zeigt eine Seitenansicht eines Teils eines Fahrzeugs 100 (z.B. ein Nutzfahrzeug oder ein Nutzfahrzeug-Anhänger) und des Einhängers 1 aus Figur 1 gemäß einer Ausführungsform der Erfindung, während Figur 3 eine vergrößerte Seitenansicht insbesondere des Einhängers 1 zeigt. Die Figuren 2 und 3 zeigen den Einhänger 1 in einem Betriebszustand, in dem die Hebe-/Senkeinrichtung 6 die Räder 2 in Bodenkontakt hält, und der Einhänger 1 somit nicht zur Fahrzeugmasse zählt. Bezugszeichen HS kennzeichnet die Heckseite des Fahrzeugs 100, während die Frontseite FS (vgl. Figur 7) in Figur 2 nicht zu sehen ist.

Den Figuren 2 und 3 kann insbesondere entnommen werden, dass der Einhänger 1 kein klassischer Anhänger zum Ankuppeln hinter ein Zugfahrzeug ist, sondern so ausgeführt ist, dass er samt Rädern 2 und vorzugsweise samt Aufnahmeraum 3 unter das Fahrzeug 100 platziert werden kann, um es von unten anzutreiben. Der Einhänger 1 ist samt Rädern 2 und vorzugsweise samt des Aufnahmeraums 3 hinter der Frontseite FS und vor der Heckseite HS des Fahrzeugs 100 platziert. Im Rahmen der Erfindung muss der Einhänger 1 allerdings nicht zwingend vollständig unter dem Fahrzeug 100 angeordnet werden. Vielmehr können auch Teile des Einhängers 1 von dem Fahrzeug 100 z.B. nach hinten oder zur Seite abstehen. Die Platzierung des Einhängers 1 unter das Fahrzeug 100 ermöglicht, dass der Einhänger 1 nahe zu Fahrzeugkomponenten positionierbar ist, die mit dem Einhänger 1 in Wirkverbindung gebracht werden sollen.

Der Einhänger 1 ist benachbart zu einer Fahrzeughinterachse montiert, um mit der Fahrzeughinterachse eine Art Tandemachsanordnung. Alternativ oder ergänzend kann die Antriebseinrichtung des Einhängers 1 mit einer Schnittstelle ausgestattet sein, über die eine mit einer komplementären Schnittstelle versehene Fahrzeugachse des Fahrzeugs 100 angetrieben werden kann. Die Schnittstellen können z.B. in Form einer Zapfwellenverbindung oder anderer geeigneter Kopplungstechniken realisiert werden. Die mittels des Einhängers 1 anzutreibende Fahrzeugachse kann in Form einer Durchtriebsachse realisiert sein.

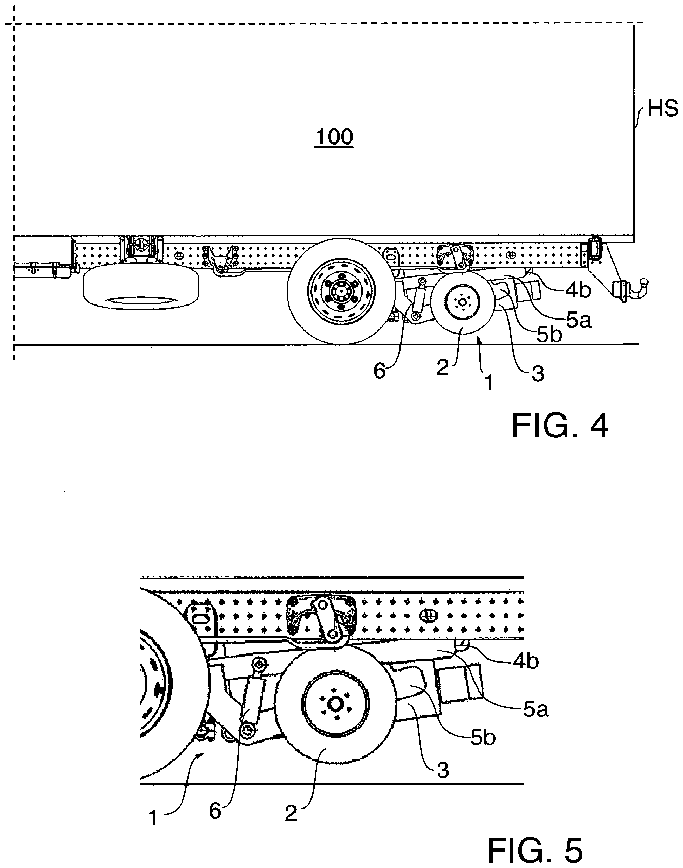

Figur 4 zeigt eine Seitenansicht eines Teils des Fahrzeugs 100 und des Einhängers 1 der Figuren 2 und 3, während Figur 5 eine vergrößerte Seitenansicht insbesondere des Einhängers 1 zeigt. Die Figuren 4 und 5 zeigen den Einhänger 1 in einem Verweilzustand, in dem die Hebe-/Senkeinrichtung 6 die Räder 2 vom Boden beabstandet hält.

Figur 6 zeigt eine perspektivische Ansicht des Einhängers 1 und eines Teils des Fahrzeugs 100. In Figur 6 ist der Laderaum nebst Ladeboden des Fahrzeugs 100 zu Veranschaulichungszwecken weggelassen, so dass ein perspektivischer Blick von oben auf das Fahrgestell des Fahrzeugs 100 und den darunter platzierten Einhänger 1 ermöglicht wird. Insbesondere zeigt Figur 6 die am Fahrzeug 100 ausgebildete Befestigungseinrichtung 104a, 104b zur Montage des Einhängers 1. Die Befestigungseinrichtung 104a, 104b ist mit dem Fahrgestell des Fahrzeugs 100 verbunden. Die Befestigungseinrichtung 104a, 104b umfasst das vordere Lagerelement 104a in Form einer Rockinger- oder Maulkupplung zur Befestigung des ösenförmigen Kopplungselements 4a des Einhängers 1 und das hintere Lagermittel 104b in Form einer simplen Querstange zum Befestigen des hakenförmigen Kopplungsmittels 4b des Einhängers 1. Das vordere Lagerelement 104a und das hintere Lagermittel 104b sind hinter der Frontseite FS und vor der Heckseite HS des Fahrzeugs 100 angeordnet, unter einer Ladefläche des Fahrzeugs 100 platziert, von der Unterseite des Fahrzeugs 100 zugänglich und zum lösbaren Verbinden mit der Kopplungseinrichtung 4a, 4b des Einhängers 1 ausgeführt. Zumindest ein Teil der Befestigungseinrichtung 104a, 104b ist benachbart zu einer Fahrzeughinterachse angeordnet, wodurch die Fahrzeughinterachse und der Einhänger 1 eine Art Tandemachsanordnung oder Durchtriebsnachlaufachse bilden können.

Figur 6 zeigt außerdem die Führungsbahn 107, die zum Führen der Führungseinrichtung 7 des Einhängers 1 dient, um den Einhänger 1 an vordefinierter Position und vorzugsweise mit vordefinierter Ausrichtung unter dem Fahrzeug 100 zu platzieren, was durch die gestrichelte Linie in Figur 6 angedeutet ist. Die Führungsbahn 107 startet an einer Stelle, die von einer Außenseite des Fahrzeugs 100 aus quasi frei zugänglich ist, und endet an der vordefinierten Position unter dem Fahrzeug 100. Die Führungsbahn 107 kann alternativ auch an der Heckseite HS des Fahrzeugs 100 beginnen.

Figur 7 zeigt eine schematische Draufsicht auf ein Fahrzeug 100 und einen Einhänger 1 gemäß einer Ausführungsform der Erfindung während eines Lenk-/Kurvenmanövers. Die Pfeile kennzeichnen die Fahrtrichtung des Fahrzeugs 100. Bezugszeichen HS kennzeichnet die Heckseite des Fahrzeugs 100, während Bezugszeichen FS die Frontseite des Fahrzeugs 100 kennzeichnet.

Figur 7 kann insbesondere entnommen werden, dass der Einhänger 1 lenkfest an das Fahrzeug 100 montiert ist. Dadurch wird gewährleistet, dass der Einhänger 1, insbesondere die Tragstruktur 5a, 5b selbst während eines Lenkvorgangs des Fahrzeugs 100 zur Längsrichtung L des Fahrzeugs 100 entsprechend einer Fahrzeugachse ausgerichtet bleibt.

Zu erwähnen ist, dass die Antriebseinrichtung und/oder der Energiespeicher vorzugsweise elektrisch-, gas- oder hydraulisch-basiert ausgebildet sind.

Zu erwähnen ist ferner, dass die Erfindung ebenso Ausführungsformen mit einem Rad, zwei Rädern oder sogar mehr als zwei Rädern umfasst.

Zu erwähnen ist außerdem, dass der Einhänger 1 mit einer Portachsenkonstruktion ausgestattet sein kann, die der Art nach aus dem Stand der Technik bekannt ist und zweckmäßig in der Lage ist, extrem hohes Fahrzeuggewicht aufzunehmen (z.B. bis zu ungefähr max. 13 Tonnen Achslast). Der Aufnahmeraum 3 kann z.B. von der Portalachse teilweise eingerahmt werden, was zu einem kompakten Einhänger 1 führt.

## Patentansprüche

1. Einhänger (1) zum zumindest unterstützenden, vorzugsweise zum zumindest zeitweise alleinigen, Antreiben eines Fahrzeugs (100), nämlich eines Nutzfahrzeugs und/oder eines Nutzfahrzeug-Anhängers, mit
- zumindest einem Rad (2), vorzugsweise zumindest zwei Rädern,
- einer Antriebseinrichtung,
- einem Energiespeicher für die Antriebseinrichtung,
- einer Kopplungseinrichtung (4a, 4b), über die der Einhänger (1) mit dem Fahrzeug (100) verbindbar ist und
- einer Tragstruktur (5a, 5b),
**dadurch gekennzeichnet, dass**
- die Antriebseinrichtung zum Antreiben des Rads (2) dient und die Tragstruktur (5a, 5b) zur Aufnahme von Fahrzeuggewicht ausgeführt ist, und/oder
- die Antriebseinrichtung mit einer Schnittstelle zum Antreiben einer Radachse des Fahrzeugs (100) ausgeführt ist,
- wobei der Einhänger (1) eine Hebe-/Senkeinrichtung umfasst, die ausgeführt ist, um das Rad (2) nach Montage des Einhängers (1) am Fahrzeug (100) wahlweise anzuheben oder abzusenken und wahlweise in Bodenkontakt zu bringen oder vom Boden zu beabstanden.

2. Einhänger (1) nach Anspruch 1, wobei der Einhänger (1) ausgeführt ist, um samt Rad (2) unter das Fahrzeug (100) platziert zu werden, um es von unten anzutreiben.

3. Einhänger (1) nach Anspruch 1 oder 2, wobei der Einhänger (1) ausgeführt ist, um samt Rad (2) hinter der Frontseite und vor der Heckseite des Fahrzeugs (100) platziert zu werden.

4. Einhänger (1) nach Anspruch 1, wobei der Einhänger (1) ausgeführt ist, um
- hinten an das Fahrzeug (100) platziert zu werden, um es von hinten anzutreiben, oder
- vorne an das Fahrzeug (100) platziert zu werden, um es von vorne anzutreiben.

5. Einhänger (1) nach einem der vorhergehenden Ansprüche, wobei die Kopplungseinrichtung (4a, 4b) ausgeführt ist, den Einhänger (1) an das Fahrzeug (100) lenkfest anzubringen, vorzugsweise so, dass der Einhänger (1) selbst während eines Lenkvorgangs zur Längsrichtung (L) des Fahrzeugs (100) ausgerichtet bleibt.

6. Einhänger (1) nach einem der vorhergehenden Ansprüche, wobei die Kopplungseinrichtung (4a, 4b) ausgeführt ist, den Einhänger (1) in Bezug auf seine Querrichtung (Q) pendelbar an das Fahrzeug (100) anzubringen.

7. Einhänger (1) nach einem der vorhergehenden Ansprüche, wobei die Kopplungseinrichtung (4a, 4b) ein hinteres, vorzugsweise hakenförmiges Kopplungsmittel (4b) zum Befestigen an einem am Fahrzeug (100) vorgesehenen Lagermittel (104b) umfasst.

8. Einhänger (1) nach einem der vorhergehenden Ansprüche, wobei die Kopplungseinrichtung (4a, 4b) ein vorderes, vorzugsweise ösenförmiges Kopplungselement (4a) zum Befestigen an einem am Fahrzeug (100) vorgesehenen Lagerelement (104a) umfasst.

9. Einhänger (1) nach Anspruch 7 oder 8, wobei das hintere Kopplungsmittel (4b) und das vordere Kopplungselement (4a) hintereinander angeordnet und so aufeinander abgestimmt sind, dass das hintere Kopplungsmittel (4b) um das Rad (2) nach oben schwenkbar ist zum Befestigen an dem Lagermittel (104b).

10. Einhänger (1) nach einem der vorhergehenden Ansprüche, wobei der Einhänger (1) eine rekuperative Bremseinrichtung umfasst.

11. Einhänger (1) nach einem der vorhergehenden Ansprüche, wobei die Antriebseinrichtung als Elektroantriebsmaschine und der Energiespeicher als Batterieeinrichtung ausgeführt sind.

12. Einhänger (1) nach einem der vorhergehenden Ansprüche, wobei die Antriebseinrichtung ausgeführt ist, das Rad (2) und/oder die Radachse des Fahrzeugs (100) wahlweise vorwärts oder rückwärts anzutreiben.

13. Einhänger (1) nach einem der vorhergehenden Ansprüche, wobei die Hebe-/Senkeinrichtung (6) ausgeführt ist, um die Aufnahme des Fahrzeuggewichts der Größe nach einstellbar zu gestalten.

14. Einhänger (1) nach einem der vorhergehenden Ansprüche, wobei die Hebe-/Senkeinrichtung (6) ausgeführt ist, um die Tragstruktur (5a, 5b) der Höhe (H) nach veränderbar zu gestalten.

15. Einhänger (1) nach einem der vorhergehenden Ansprüche, wobei die Antriebseinrichtung zusätzlich als Antriebseinrichtung für die Hebe-/Senkeinrichtung (6) dient.

16. Einhänger (1) nach einem der vorhergehenden Ansprüche, wobei die Antriebseinrichtung zwei Einzelradantriebe umfasst, wovon einer zum Antreiben eines ersten Rads (2) und ein anderer zum Antreiben eines zweiten Rads (2) des Einhängers (1) ausgeführt ist.

17. Einhänger (1) nach einem der vorhergehenden Ansprüche, wobei
- der Einhänger (1) selbst lenkbar ausgestaltet ist, und/oder
- die zwei Einzelradantriebe dazu dienen, den Einhänger (1) und somit vorzugsweise das Fahrzeug (100) lenkbar zu gestalten.

18. Einhänger (1) nach einem der vorhergehenden Ansprüche, wobei der Einhänger (1) eine Führungseinrichtung (7) umfasst, die entlang einer am Fahrzeug (100) ausgebildeten Führungsbahn (107) führbar ist, um den Einhänger (1) an vordefinierter Position und/oder mit vordefinierter Ausrichtung unter dem Fahrzeug (100) zu platzieren.

19. Einhänger (1) nach Anspruch 18, wobei der Einhänger (1) konfiguriert ist, zumindest abschnittsweise mittels der Antriebseinrichtung mit vordefinierter Geschwindigkeit entlang der Führungsbahn (107) zu oder weg von der vordefinierten Position zu fahren.

20. Einhänger (1) nach einem der vorhergehenden Ansprüche, wobei der Einhänger (1) eine Empfängereinrichtung für eine Fernbedienung umfasst, über die der Einhänger (1) ferngesteuert werden kann.

21. Einhänger (1) nach einem der vorhergehenden Ansprüche, wobei der Einhänger (1) zumindest eine fluidische, elektrische und/oder antriebskraftbezogene Schnittstelle zur Verbindung mit einer zugehörigen, am Fahrzeug (100) ausgebildeten Schnittstelle aufweist, über die das Fahrzeug (100) mit einem Fluid, elektrischer Energie und/oder Antriebskraft versorgbar ist.

22. Einhänger (1) nach einem der vorhergehenden Ansprüche, wobei die Tragstruktur (5a, 5b)
- zur Aufnahme von Fahrzeuggewicht ausgeführt, um die Traktion des Einhängers (1) zu erhöhen und/oder um zumindest eine Fahrzeugachse zu entlasten, und/oder
- einen ersten Tragabschnitt (5a) und einen zweiten Tragabschnitt (5b) umfasst, die an einer Schwenkachse (SA) und mittels der Hebe-/Senkeinrichtung (6) schwenkbar miteinander verbunden sind.

23. Fahrzeug (100), nämlich ein Nutzfahrzeug und/oder ein Nutzfahrzeug-Anhänger, mit einem Einhänger (1) nach einem der vorhergehenden Ansprüche und mit einer Befestigungseinrichtung (104a, 104b), die
- hinter der Frontseite (FS) und vor der Heckseite (HS) des Fahrzeugs (100) angeordnet ist,
- von der Unterseite des Fahrzeugs (100) zugänglich ist, und
- zum Verbinden mit der Kopplungseinrichtung (4a, 4b) des Einhängers (1) ausgeführt ist.

24. Fahrzeug (100) nach Anspruch 23, wobei das Fahrzeug (100) eine unter dem Fahrzeug (100) verlaufende Führungsbahn (107) für die Führungseinrichtung (7) des Einhängers (1) aufweist, um den Einhänger (1) an vordefinierter Position und/oder mit vordefinierter Ausrichtung unter dem Fahrzeug (100) zu platzieren.

25. Fahrzeug (100) nach Anspruch 23 oder 24, wobei das Fahrzeug (100) mit zumindest einer fluidischen, elektrischen und/oder antriebskraftbezogenen Schnittstelle ausgestattet ist, die
- hinter der Frontseite (FS) und vor der Heckseite (HS) des Fahrzeugs (100) angeordnet ist,
- von der Unterseite des Fahrzeugs (100) zugänglich ist,
- zur Verbindung mit einer zugehörigen, am Einhänger (1) ausgebildeten Schnittstelle dient, und
- über die das Fahrzeug (100) mit einem Fluid, elektrischer Energie und/oder Antriebskraft aus dem Einhänger (1) versorgbar ist.

26. Fahrzeug (100) nach einem der Ansprüche 23 bis 25, wobei die Befestigungseinrichtung (104a, 104b) ein vorderes Lagerelement (104a) und ein hinteres Lagermittel (104b) umfasst, die hinter der Frontseite (FS) und vor der Heckseite (HS) des Fahrzeugs (100) angeordnet sind.

27. Fahrzeug (100) nach einem der Ansprüche 23 bis 26, wobei das Fahrzeug (100) eine Radachse mit einer Schnittstelle umfasst, über die die Radachse mittels der Antriebseinrichtung des Einhängers (1) antreibbar ist.

## Claims

1. Attachment unit (1) for the at least auxiliary drive, preferably at least temporarily the only drive, of a vehicle (100), specifically of a commercial vehicle and/or of a commercial vehicle trailer, comprising
- at least one wheel (2), preferably at least two wheels,
- a drive arrangement,
- an energy storage device for the drive arrangement,
- a coupling arrangement (4a, 4b) via which is the attachment unit (1) can be connected to the vehicle (100), and
- a support structure (5a, 5b),
**characterized in that**
- the drive arrangement serves to drive the wheel (2) and the support structure (5a, 5b) is configured to support vehicle weight, and/or
- the drive arrangement is configured with an interface for driving a wheel axle of the vehicle (100),
- wherein the attachment unit (1) comprises a raising/lowering device which is configured selectively to raise or lower the wheel (2) after the attachment unit (1) has been installed on the vehicle (100) and selectively to bring said wheel into contact with the ground or to position it at a distance from the ground.

2. Attachment unit (1) according to Claim 1, wherein the attachment unit (1) is configured to be placed, together with wheel (2), under the vehicle (100) in order to drive it from below.

3. Attachment unit (1) according to Claim 1 or 2, wherein the attachment unit (1) is configured to be placed, together with wheel (2), behind the front end and in front of the rear end of the vehicle (100).

4. Attachment unit (1) according to Claim 1, wherein the attachment unit (1) is configured
- to be placed at the rear of the vehicle (100) in order to drive it from the rear, or
- to be placed at the front of the vehicle (100) in order to drive it from the front.

5. Attachment unit (1) according to any one of the preceding claims, wherein the coupling arrangement (4a, 4b) is configured to attach the attachment unit (1) to the vehicle (100) in an unsteered manner, preferably in such a way that the attachment unit (1) remains aligned with the longitudinal direction (L) of the vehicle (100) even during a steering process.

6. Attachment unit (1) according to any one of the preceding claims, wherein the coupling arrangement (4a, 4b) is configured to attach the attachment unit (1) to the vehicle (100) in a swingable manner with respect to its transverse direction (Q).

7. Attachment unit (1) according to any one of the preceding claims, wherein the coupling arrangement (4a, 4b) includes a rear, preferably hook-shaped coupling means (4b) to be fastened to a bearing means (104b) provided on the vehicle (100).

8. Attachment unit (1) according to any one of the preceding claims, wherein the coupling arrangement (4a, 4b) includes a front, preferably eye-shaped coupling element (4a) to be fastened to a bearing element (104a) provided on the vehicle (100).

9. Attachment unit (1) according to Claim 7 or 8, wherein the rear coupling means (4b) and the front coupling element (4a) are arranged one behind the other and are coordinated with one another in such a way that the rear coupling means (4b) can be swivelled up around the wheel (2) in order to be fastened to the bearing means (104b).

10. Attachment unit (1) according to any one of the preceding claims, wherein the attachment unit (1) includes a regenerative braking device.

11. Attachment unit (1) according to any one of the preceding claims, wherein the drive arrangement is in the form of an electric drive machine and the energy storage device is in the form of a battery device.

12. Attachment unit (1) according to any one of the preceding claims, wherein the drive arrangement is configured to drive the wheel (2) and/or the wheel axle of the vehicle (100) selectively forwards or backwards.

13. Attachment unit (1) according to any one of the preceding claims, wherein the raising/lowering device (6) is configured to configure the amount of vehicle weight supported to be adjustable.

14. Attachment unit (1) according to any one of the preceding claims, wherein the raising/lowering device (6) is designed to configure the support structure (5a, 5b) to be variable with respect to height (H).

15. Attachment unit (1) according to any one of the preceding claims, wherein the drive arrangement serves additionally as the drive arrangement for the raising/lowering device (6).

16. Attachment unit (1) according to any one of the preceding claims, wherein the drive arrangement comprises two single-wheel drives, one of which is configured to drive a first wheel (2) and another to drive a second wheel (2) of the attachment unit (1).

17. Attachment unit (1) according to any one of the preceding claims, wherein
- the attachment unit (1) is itself configured to be steerable, and/or
- the two single-wheel drives serve to configure the attachment unit (1), and therefore preferably the vehicle (100), to be steerable.

18. Attachment unit (1) according to any one of the preceding claims, wherein the attachment unit (1) includes a guide device (7) which is guidable along a guide track (107) formed on the vehicle (100) in order to position the attachment unit (1) at a predefined position and/or with a predefined orientation under the vehicle (100).

19. Attachment unit (1) according to Claim 18, wherein the attachment unit (1) is configured to be moved by means of the drive arrangement at a predefined speed at least for some distance along the guide track (107) to or away from the predefined position.

20. Attachment unit (1) according to any one of the preceding claims, wherein the attachment unit (1) includes a receiver device for a remote operation system via which the attachment unit (1) can be remotely controlled.

21. Attachment unit (1) according to any one of the preceding claims, wherein the attachment unit (1) has at least one fluidic, electrical and/or drive-power related interface for connection to an associated interface formed on the vehicle (100) via which the vehicle (100) can be supplied with a fluid, electrical energy and/or drive power.

22. Attachment unit (1) according to any one of the preceding claims, wherein the support structure (5a, 5b)
- is configured to support vehicle weight in order to increase the traction of the attachment unit (1) and/or to relieve the load on at least one vehicle axle, and/or
- includes a first support portion (5a) and a second support portion (5b) which are connected swivellably to one another at a swivel axis (SA) and by means of the raising/lowering device (6).

23. Vehicle (100), specifically a commercial vehicle and/or a commercial vehicle trailer, having an attachment unit (1) according to any one of the preceding claims and having a fastening arrangement (104a, 104b) which
- is arranged behind the front end (FS) and in front of the rear end (HS) of the vehicle (100),
- is accessible from the underside of the vehicle (100), and
- is configured to be connected to the coupling arrangement (4a, 4b) of the attachment unit (1).

24. Vehicle (100) according to Claim 23, wherein the vehicle (100) has a guide track (107) running underneath the vehicle (100) for the guide device (7) of the attachment unit (1) in order to position the attachment unit (1) at a predefined position and/or with a predefined orientation under the vehicle (100).

25. Vehicle (100) according to Claim 23 or 24, wherein the vehicle (100) is equipped with at least one fluidic, electrical and/or drive-power related interface which
- is arranged behind the front end (FS) and in front of the rear end (HS) of the vehicle (100),
- is accessible from the underside of the vehicle (100),
- serves to be connected to an associated interface formed on the attachment unit (1), and
- via which the vehicle (100) can be supplied with a fluid, electrical energy and/or drive power from the attachment unit (1).

26. Vehicle (100) according to any one of Claims 23 to 25, wherein
the fastening arrangement (104a, 104b) includes a front bearing element (104a) and a rear bearing means (104b) which are arranged behind the front end (FS) and in front of the rear end (HS) of the vehicle (100).

27. Vehicle (100) according to any one of Claims 23 to 26, wherein the vehicle (100) includes a wheel axle having an interface via which the wheel axle is driveable by means of the drive arrangement of the attachment unit (1).

## Revendications

1. Système d'accroche (1) pour l'entraînement au moins d'assistance, de préférence au moins par intermittence unique, d'un véhicule (100), à savoir d'un véhicule utilitaire et/ou d'une remorque de véhicule utilitaire, avec
- au moins une roue (2), de préférence au moins deux roues,
- un dispositif d'entraînement,
- un accumulateur d'énergie pour le dispositif d'entraînement,
- un dispositif d'attelage (4a, 4b), par lequel le système d'accroche (1) peut être relié au véhicule (100), et
- une structure de support (5a, 5b),
**caractérisé en ce que**
- le dispositif d'entraînement sert pour l'entraînement de la roue (2) et la structure de support (5a, 5b) est réalisée en vue de reprendre le poids du véhicule, et/ou
- le dispositif d'entraînement est réalisé avec une interface pour l'entraînement d'un essieu du véhicule (100),
- dans lequel le système d'accroche (1) comprend un dispositif de levage/descente, qui est réalisé en vue de soulever ou d'abaisser au choix la roue (2) après le montage du système d'accroche (1) au véhicule (100) et au choix de la mettre en contact avec le sol ou de l'écarter du sol.

2. Système d'accroche (1) selon la revendication 1, dans lequel le système d'accroche (1) est réalisé en vue d'être placé avec la roue (2) en-dessous du véhicule (100), afin de l'entraîner par-dessous.

3. Système d'accroche (1) selon la revendication 1 ou 2, **caractérisé en ce que** le système d'accroche (1) est réalisé en vue d'être placé avec la roue (2) derrière le côté avant et devant le côté arrière du véhicule (100).

4. Système d'accroche (1) selon la revendication 1, dans lequel le système d'accroche (1) est réalisé en vue
- d'être placé à l'arrière sous le véhicule (100), afin de l'entraîner par l'arrière, ou
- d'être placé à l'avant sous le véhicule (100), afin de l'entraîner par l'avant.

5. Système d'accroche (1) selon l'une quelconque des revendications précédentes, dans lequel le dispositif d'attelage (4a, 4b) est réalisé en vue d'agencer le système d'accroche (1) au véhicule (100) en direction fixe, de préférence de telle manière que le système d'accroche (1) lui-même reste aligné avec la direction longitudinale (L) du véhicule (100) pendant une opération de virage.

6. Système d'accroche (1) selon l'une quelconque des revendications précédentes, dans lequel le dispositif d'attelage (4a, 4b) est réalisé en vue d'agencer le système d'accroche (1) au véhicule (100) de façon oscillante par rapport à sa direction transversale (Q).

7. Système d'accroche (1) selon l'une quelconque des revendications précédentes, dans lequel le dispositif d'attelage (4a, 4b) comprend un moyen d'attelage arrière (4b), de préférence en forme de crochet, pour la fixation à un moyen de palier (104b) prévu sur le véhicule (100).

8. Système d'accroche (1) selon l'une quelconque des revendications précédentes, dans lequel le dispositif d'attelage (4a, 4b) comprend un dispositif d'attelage avant, de préférence en forme d'oeillet (4a), pour la fixation à un élément de palier (104a) prévu sur le véhicule (100).

9. Système d'accroche (1) selon la revendication 7 ou 8, dans lequel le moyen d'attelage arrière (4b) et le moyen d'attelage avant (4a) sont disposés l'un derrière l'autre et sont accordés l'un à l'autre, de telle manière que le moyen d'attelage arrière (4b) puisse pivoter vers le haut autour de la roue (2) pour la fixation au moyen de palier (104b).

10. Système d'accroche (1) selon l'une quelconque des revendications précédentes, dans lequel le système d'accroche (1) comprend un système de freinage à récupération.

11. Système d'accroche (1) selon l'une quelconque des revendications précédentes, dans lequel le dispositif d'entraînement est réalisé en forme de machine d'entraînement électrique et l'accumulateur d'énergie est réalisé en forme de dispositif de batteries.

12. Système d'accroche (1) selon l'une quelconque des revendications précédentes, dans lequel le dispositif d'entraînement est réalisé en vue d'entraîner, au choix vers l'avant ou vers l'arrière, la roue (2) et/ou l'essieu du véhicule (100).

13. Système d'accroche (1) selon l'une quelconque des revendications précédentes, dans lequel le dispositif de levage/descente (6) est réalisé en vue de configurer le logement du poids du véhicule de façon réglable en fonction de sa taille.

14. Système d'accroche (1) selon l'une quelconque des revendications précédentes, dans lequel le dispositif de levage/descente (6) est réalisé en vue de configurer la structure de support (5a, 5b) de façon variable en fonction de sa hauteur (H).

15. Système d'accroche (1) selon l'une quelconque des revendications précédentes, dans lequel le dispositif d'entraînement sert en outre de dispositif d'entraînement pour le dispositif de levage/descente (6).

16. Système d'accroche (1) selon l'une quelconque des revendications précédentes, dans lequel le dispositif d'entraînement comprend deux entraînements de roue individuels, dont l'un est réalisé en vue de l'entraînement d'une première roue (2) et un autre est réalisé en vue de l'entraînement d'une deuxième roue (2) du système d'accroche (1).

17. Système d'accroche (1) selon l'une quelconque des revendications précédentes, dans lequel
- le système d'accroche (1) est lui-même configuré de façon dirigeable, et/ou
- les deux entraînements de roue individuels servent à configurer le système d'accroche (1) et dès lors de préférence le véhicule (100) de façon dirigeable.

18. Système d'accroche (1) selon l'une quelconque des revendications précédentes, dans lequel le système d'accroche (1) comprend un dispositif de guidage (7), qui peut être guidé le long d'une piste de guidage (107) formée sur le véhicule (100), afin de placer le système d'accroche (1) à une position prédéfinie et/ou avec une orientation prédéfinie sous le véhicule (100).

19. Système d'accroche (1) selon la revendication 18, dans lequel le système d'accroche (1) est configuré pour se déplacer vers ou à partir de la position prédéfinie le long de la piste de guidage (107) au moins localement au moyen du dispositif d'entraînement avec une vitesse prédéfinie.

20. Système d'accroche (1) selon l'une quelconque des revendications précédentes, dans lequel le système d'accroche (1) comprend un dispositif de récepteur pour une commande à distance, par laquelle le système d'accroche (1) peut être commandé à distance.

21. Système d'accroche (1) selon l'une quelconque des revendications précédentes, dans lequel le système d'accroche (1) présente au moins une interface fluidique, électrique et/ou reliée à la force motrice pour la liaison avec une interface correspondante formée sur le véhicule (100), par laquelle le véhicule (100) peut être alimenté en fluide, en énergie électrique et/ou en force motrice.

22. Système d'accroche (1) selon l'une quelconque des revendications précédentes, dans lequel la structure de support (5a, 5b)
- est réalisée pour reprendre le poids du véhicule, afin d'augmenter la traction du système d'accroche (1) et/ou de délester au moins un essieu du véhicule, et/ou
- comprend une première partie de support (5a) et une deuxième partie de support (5b), qui sont reliées l'une à l'autre de façon pivotante à un axe de pivotement (SA) et au moyen du dispositif de levage/descente (6).

23. Véhicule (100), à savoir véhicule utilitaire et/ou remorque de véhicule utilitaire, avec un système d'accroche (1) selon l'une quelconque des revendications précédentes et avec un dispositif de fixation (104a, 104b), qui
- est disposé derrière le côté avant (FS) et devant le côté arrière (HS) du véhicule (100),
- est accessible par le côté inférieur du véhicule (100), et
- est réalisé en vue de se relier au dispositif d'attelage (4a, 4b) du système d'accroche (1).

24. Véhicule (100) selon la revendication 23, dans lequel le véhicule (100) présente une piste de guidage (107) s'étendant sous le véhicule (100) pour le dispositif de guidage (7) du système d'accroche (1), en vue de placer le système d'accroche (1) à une position prédéfinie et/ou avec une orientation prédéfinie sous le véhicule (100).

25. Véhicule (100) selon la revendication 23 ou 24, dans lequel le véhicule (100) est équipé d'au moins une interface fluidique, électrique et/ou reliée à la force motrice, qui
- est disposée derrière le côté avant (FS) et devant le côté arrière (HS) du véhicule (100),
- est accessible par le côté inférieur du véhicule (100),
- sert pour la liaison avec une interface correspondante formée sur le système d'accroche (1), et
- par laquelle le véhicule (100) peut être alimenté en fluide, en énergie électrique et/ou en force motrice à partir du système d'accroche (1).

26. Véhicule (100) selon l'une quelconque des revendications 23 à 25, dans lequel le dispositif de fixation (104a, 104b) comprend un élément de palier antérieur (104a) et un élément de palier postérieur (104b), qui sont disposés derrière le côté avant (FS) et devant le côté arrière (HS) du véhicule (100).

27. Véhicule (100) selon l'une quelconque des revendications 23 à 26, dans lequel le véhicule (100) comprend un essieu avec une interface, par laquelle l'essieu peut être entraîné au moyen du dispositif d'entraînement du système d'accroche (1).
